(19) Europäisches Patentamt
European Patent Office
Office européen des brevets

(11) **EP 4 604 607 A1**

(12) **EUROPEAN PATENT APPLICATION**

(43) Date of publication:
**20.08.2025 Bulletin 2025/34**

(21) Application number: **24305257.8**

(22) Date of filing: **14.02.2024**

(51) International Patent Classification (IPC):
**H04W 28/02** (2009.01)    **H04W 72/543** (2023.01)
**H04L 47/2491** (2022.01)    **H04W 72/0446** (2023.01)

(52) Cooperative Patent Classification (CPC):
**H04W 28/0268; H04L 47/2491; H04W 28/0215;
H04W 72/543; H04W 72/0446**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicants:
• **Mitsubishi Electric R&D Centre Europe B.V.
1119 NS  Schiphol Rijk Amsterdam (NL)**
Designated Contracting States:
**FR**

• **MITSUBISHI ELECTRIC CORPORATION
Chiyoda-ku
Tokyo 100-8310 (JP)**

(72) Inventors:
• **BONNEVILLE, Hervé
35708 RENNES CEDEX 7 (FR)**
• **GRESSET, Nicolas
35708 RENNES CÉDEX 7 (FR)**
• **Letessier, Jonathan
35708 RENNES CEDEX 7 (FR)**

(74) Representative: **Plasseraud IP
104 Rue de Richelieu
CS92104
75080 Paris Cedex 02 (FR)**

(54) **TIME CONSTRAINT SCHEDULING COMPUTATION IN A TIME SENSITIVE NETWORK**

(57)    The disclosure relates to a method performed by an entity of a time sensitive network (TSN), to schedule transmission times of intermediary bridges between end stations communicating with each other via the time sensitive network (TSN), at least one bridge of said intermediary bridges being a radiofrequency bridge involving a radiofrequency cellular network (5GS). The entity (CNC) of the time sensitive network (TSN) obtains from the radiofrequency cellular network (5GS) at least a capability prediction Qp of a Quality of Service of said wireless bridge, and schedules said transmission times based on said capability prediction Qp and further on a prediction horizon Hp corresponding to a validity duration of the QoS capability prediction Qp.

FIG. 15

**Description**

The present disclosure relates to a method and system for integrating a wireless bridge in a Time Sensitive Network (TSN) taking into account variations of Quality of Service of the radio links (for example due to terminals mobility).

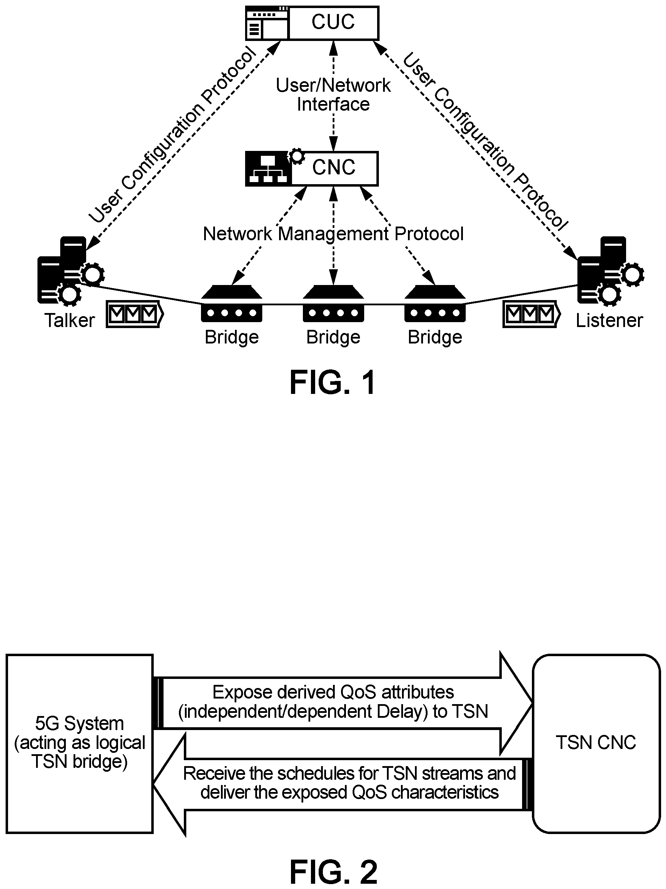

In TSN networks, for achieving a guaranteed end to end latency for the transmission of a packet between a talker and a listener, it is necessary to rely on a predetermined data path or route and scheduling of operation of the network elements along the path. A TSN comprises several elements as illustrated in figure 1, such as:

- End stations such as terminals of a talker and a listener,
- A top system for Centralized User Configuration (CUC): the end stations transmit their flow requirements to the CUC system and the CUC system transmits the user configuration to a Centralized Network Configuration node (CNC),
- The CNC node receives TSN flow requirements and TSN topology from the CUC system. It gets from the different TSN bridges egress and ingress port identification, traffic class and QoS indicators as minimum and maximum delays per port pairs. The CNC node calculates a schedule, i.e. a transmission time, for the intermediary bridges between the TSN end stations, and the control parameters of the time aware shaping (TAS) of the different bridges as well as the routing decisions, i.e. bridge selection. These calculations are performed to fulfil the data flow requirements of the TSN flows.
- Entities called "Bridges" are packet switching devices of a TSN. Packets arriving to one port (ingress) of a bridge can be routed to another port (egress) in a bounded delay. Routing delays are advertised to the CNC node. The packets are buffered at one egress port until the port is opened following a time-gating window table configured by the CNC node.

The TSN bridges relay the packets from one port to another, according to some parameters specific to each port pair, represented by an internal link. The parameters are usually:

- a dependent delay factor (which typically can depend on the payload and can be seen as the inverse of the instantaneous throughput of the link), and

- independent delay(s) (typically a fixed delay for each communication, for instance).

In a centralized implementation of the TSN, these parameters are provided to the CNC node which gathers the topology and capacities of the network links and the requirements of the data flows. After defining the data path for transmitting packets from one end station to another end station through the bridges of the TSN, the CNC node computes the scheduling of the gates openings for the packets to flow from one ES (End Station) to another ES while guaranteeing their transmission delay. For doing so, the CNC node computes the cumulated delay from egress port to egress port of two consecutive bridges on the data path, where the egress ports are defined at the output port of the bridges in the flow direction of the packets along the path (while ingress ports are the bridges input ports).

Hence, the typical configuration loop between the CNC node and the bridges of the TSN network can be described as presented hereafter, while referring to figure 2 now.

1) In a first step, the CNC node collects QoS capabilities from the different TSN bridges composing the TSN, typically independent and dependant delays.

2) The CNC node computes a schedule taking into account data flow characteristics and TSN bridges QoS capabilities such that the schedule avoids packets collisions in the network

3) The CNC node provides to each TSN bridge the computed schedule it is concerned about, typically in the form of a time-gating window table.

From then, data flows can be delivered with time guaranties.

The time it could take to execute the configuration loop can be quite long, typically from a few seconds to several hours depending on the topology complexity and the CUC system and CNC node(s) computation capabilities.

In the state-of-the-art, this configuration loop is executed when there is a data flow which is added, removed or has its QoS requirement modified, and when the TSN topology is modified, i.e. when TSN bridges are added or removed. Those events typically correspond to the modification of a production line in a factory, which are a rather rare event.

In the state-of-the-art, it is assumed that the QoS capabilities provided by the TSN bridges to the CNC nodes are guaranteed for ever.

Hence, in the state-of-the-art, the operation window, defined as the time period during which the schedule computed by the CNC (the time-gating configuration) remains valid is not an issue, so as the configuration loop time.

However, when considering integrating wireless network devices in a TSN typically where at least one TSN bridge is involved as a wireless network device (for example a cellular radiofrequency network such as a 3GPP 5G system), the assumption of having QoS capabilities provided by the TSN bridges guaranteed for ever is not well adapted to wireless network devices, where the radio conditions can evolve in space and time, leading to evolving throughput and transmission delays.

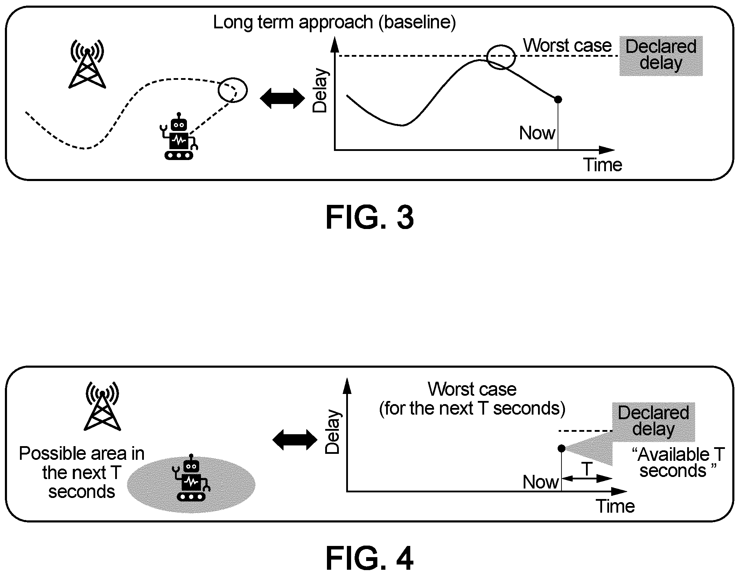

As for another example of a mobile element in a factory as a moving robot, its radio conditions can evolve when the robot moves around the factory. The state-of-the-art time-gating window can be determined only on a basis of a worst-case scenario regarding the QoS capabilities (e.g. transmission delay) announced by the network devices in space and time, i.e., declaring the performance related with cell edge positions, as illustrated in figure 3.

This leads to under-optimised utilisation of the wireless network resources.

Indeed, in a situation where a current device is not experiencing the worst case QoS capabilities, it would be beneficial for this current device and for the other devices to consider local accurate QoS capability. For example, less resources need to be reserved for the current device, which can be better shared between all devices.

However, this is not possible with the state-of-the-art operation window, which does not assume that network devices QoS capabilities may vary.

Hence, considering mobile devices in a TSN raises several challenges:

- Wireless channel fluctuates due to environment mobility or moving terminals,
- Transmission delays in 5G systems vary in time,
- CNC node's schedule computation takes some time, on its end,
- TSN configuration loop (get delays/compute schedule/send the schedule) has also a minimum value delay not necessarily compatible with wireless transmission delay variations.

The present disclosure aims to improve the situation.

It proposes a method performed by an entity of a time sensitive network, to schedule transmission times of intermediary bridges between end stations communicating with each other via the time sensitive network, at least one bridge of said intermediary bridges being a radiofrequency bridge involving a radiofrequency cellular network.

More particularly, the aforesaid entity of the time sensitive network obtains from the radiofrequency cellular network at least a capability prediction Qp of a Quality of Service (QoS) of the wireless bridge, and schedules the transmission times based on said capability prediction Qp and further on a prediction horizon Hp corresponding to a validity duration of the QoS capability prediction Qp.

It is meant by "scheduling the transmission times" the computation of the schedule of these transmission times until the sending of scheduling commands to the concerned bridges.

In an example of embodiment, the aforesaid entity can be typically a Centralized Network Configuration node of the time sensitive network.

The aforesaid wireless bridge can be typically the 5G cellular network.

The method makes it possible then to receive from the 5G network at least a capability prediction Qp of Quality of Service (QoS) for a given horizon Hp so that the entity of the time sensitive network is able to determine an efficient bridge scheduling for a next data transmission session, e.g. by computing data flows scheduling of the bridges.

In an embodiment, the aforesaid entity transmits to the radiofrequency cellular network:

- a first request to obtain at least said QoS capability prediction Qp, and

- a second request to configure said wireless bridge according to said scheduled transmission times,

and the transmission of the request for QoS capability prediction Qp precedes the transmission of the request to configure the wireless bridge within an operation cycle ending with a period of effective data transmission between the end stations (corresponding for example to the aforesaid data transmission session), said period ending before the duration of the prediction horizon Hp given for said operation cycle.

In a first embodiment, the entity:

- obtains from the radiofrequency cellular network both the QoS capability prediction Qp and the prediction horizon Hp during which the radiofrequency cellular network guarantees said QoS capability prediction Qp, and

- schedules said transmission times based on the prediction Qp and its horizon Hp provided by the radiofrequency cellular network.

In a second embodiment, the entity:

- imposes to the radiofrequency cellular network a prediction horizon Hp corresponding to a validity duration during which the QoS capability prediction Qp of said wireless bridge is to be guaranteed by the radiofrequency cellular network,

- receives from the radiofrequency cellular network a QoS capability prediction Qp corresponding to the imposed prediction horizon Hp, and

- schedules said transmission times based on the imposed prediction horizon Hp and on the received QoS capability prediction Qp.

In a third embodiment, intermediate between the first and second embodiments, the entity:

- imposes to the radiofrequency cellular network a minimum value of a prediction horizon Hp corresponding to a validity duration during which the QoS capability prediction Qp of said wireless bridge is guaranteed by the radiofrequency cellular network,

- receives from the radiofrequency cellular network a negotiated value of a prediction horizon Hp corresponding to a validity duration during which the QoS capability prediction Qp of said wireless bridge can be guaranteed by the radiofrequency cellular network, said negotiated value being equal to or higher than the minimum value, and

- schedules said transmission times based on the negotiated value of the prediction horizon Hp and on the guaranteed QoS capability prediction Qp.

In a type of embodiment where the entity of the time sensitive network operates according to successive operation cycles as explained above, in one and same operation cycle, the entity can:

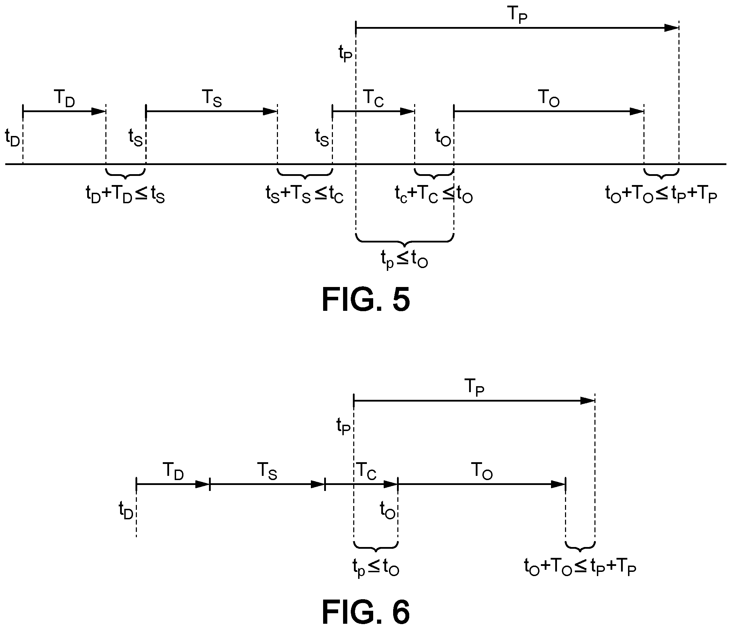

- during a data obtaining period (noted "$T_D$" in figures 5 and 6 of the appended drawings):

  * transmit a request to an entity of the radiofrequency cellular network to obtain data of at least the QoS capability prediction Qp of the wireless bridge, and

  * obtain a prediction horizon Hp corresponding to a duration of validity of the obtained QoS capability prediction Qp (Hp being determined by the entity or obtained directly from the wireless network, depending on the choice of respectively the second or the first embodiment),

- and, during a scheduling period (reference "Ts" in figures 5 and 6), can compute a schedule of said transmission times based on the QoS capability prediction Qp and its prediction horizon Hp,

the scheduling period ($T_S$) being followed, in one operation cycle, by:

- a configuration period (Tc) corresponding to a time taken by the entity (CNC) of the time sensitive network (TSN) to transmit configuration data to the intermediary bridges to prepare an effective data transmission between the end stations, and for the bridges to receive the transmitted configuration data and to be hence configured to follow the scheduled transmission times, and by

- a transmission period (To) of effective data transmission between the end stations according to the scheduled transmission times, the transmission period ($T_o$) ending before the end of validity of the QoS capability prediction Qp.

In this embodiment, the entity of the time sensitive network can compute typically, during the scheduling period (Ts), a time-gating window table defining moments when data packets, buffered at said intermediary bridges, are to be transmitted by said intermediary bridges.

In this embodiment further, the transmission period ($T_o$) of a current operation cycle can depend typically on the prediction horizon Hp given for said current operation cycle, each operation cycle having thereby a total duration depending on the prediction horizon Hp given for said each operation cycle.

Moreover, at least one of:

- said data obtaining period ($T_D$), corresponding to a duration of a data collection phase, and

- said configuration period ($T_C$), corresponding to a duration, for the entity of the time sensitive network, to send to each intermediary bridge a schedule for data flows,

can be defined as a non-tuneable timing parameter to be estimated on a worst-case scenario basis of response time.

The entity of the time sensitive network can fulfil then a constraint to schedule said transmission times during the scheduling period (Ts) remaining within a given operation cycle, while taking into account said data obtaining period ($T_D$), said configuration period (Tc) and said transmission period (To) of said given operation cycle.

In this embodiment, the operation cycle can have thus a total duration which is a fixed and non-tuneable time parameter.

Moreover, the entity of the time sensitive network can use an optimization algorithm (such as a so-called genetic algorithm) to compute the scheduling of the transmission times in order to fulfil said constraint of a remaining time within said scheduling period (Ts), said optimization algorithm being stopped at the end of the scheduling period to provide a latest best solution obtained as a result to use for the scheduling.

Alternatively, the computation resource can be adapted dynamically to fulfil the computation time limit (typically by using a variable number of computing processors, for example).

In this embodiment using an optimization algorithm, in a current operation cycle, the optimization algorithm starts a scheduling computation from a previous scheduling computation obtained for a previous operation cycle (instead of starting from scratch, making hence faster the convergence of the algorithm).

In an embodiment, the entity of the time sensitive network can transmit the request of the QoS capability prediction Qp for a current operation cycle at least before the end of the effective data transmission period ($T_o$) of a previous operation cycle preceding said current operation cycle.

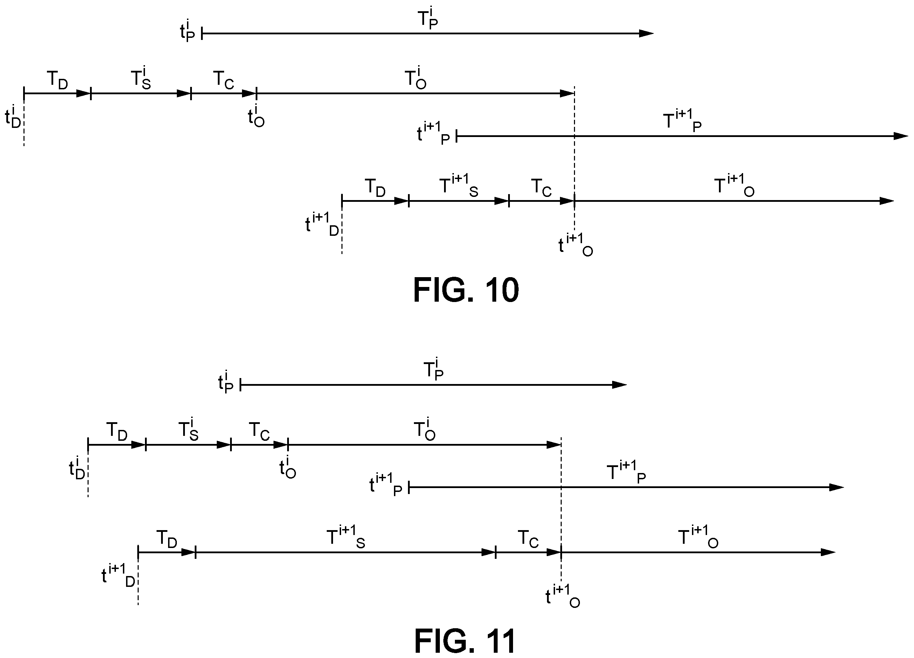

This embodiment is called hereafter a "pipelining mode" and presented in the example of figure 10.

In an embodiment, the entity of the time sensitive network can transmit the request of the QoS capability prediction Qp for a current operation cycle before the end of a previous operation cycle preceding said current operation cycle, and after the data obtaining period ($T_D$) of the previous operation cycle.

This embodiment is called hereafter a "parallel mode" and presented in the example of figure 11.

The present description aims also at a computer program comprising instructions causing the implementation of the method above, when said instructions are executed by a processing unit.

The present description aims also at the aforesaid entity of a time sensitive network, comprising a processing unit to perform the method above.

This entity can be configured to be incorporated in a Centralized Network Configuration node of the time sensitive network.

Other features, details and advantages will be shown in the following detailed description and on the figures, on which:

- Figure 1 illustrates schematically a Time Sensitive Network (TSN) general architecture,
- Figure 2 illustrates usual exchanged messages between a CNC Node and a 5G system element, especially for the exposure of QoS capabilities towards TSN-CNC,
- Figure 3 illustrates the usual "worse case" delay declaration according to the prior art approach,
- Figure 4 illustrates the approach according to the present description, with a variable declaration of delays,
- Figure 5 illustrates a timeline of sequential steps to take into account,
- Figure 6 illustrates the timeline of figure 5, but without gaps,
- Figure 7 illustrates exchanged messages between a CNC node and a 5G system element according to a first embodiment, where the 5G system element provides a prediction horizon Hp, composed of a duration $T_P$ and optionally its starting time $t_p$,
- Figure 8 illustrates exchanged messages between a CNC node and a 5G system element according to a second embodiment, where the prediction horizon duration Hp is provided to the 5G system element which takes it into account for providing back QoS capability predictions that should remain valid during the provided prediction horizon,

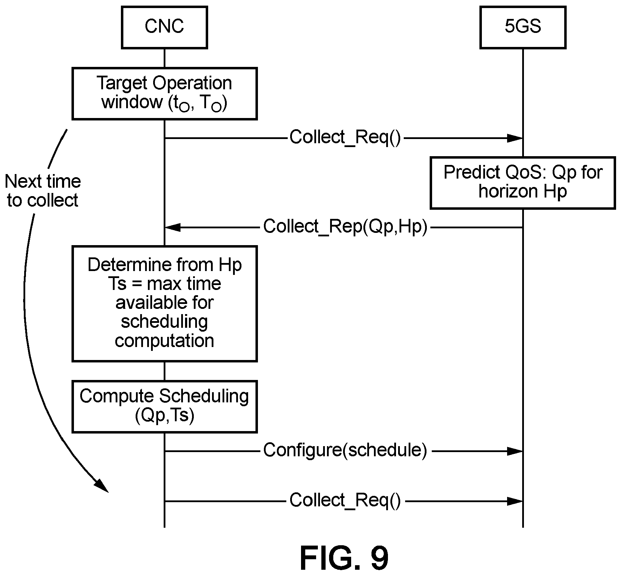

- Figure 9 illustrates exchanged messages between a CNC node and a 5G system element according to an embodiment where, for example, the prediction horizon Hp is given by the 5G system element to the CNC node, defining thus a remaining time for the CNC node to compute the scheduling, and imposing thereby the time $T_s$ taken for this computation,
- Figure 10 shows a "pipelining" operating mode for processing several successive operation windows,
- Figure 11 shows a "parallel" operating mode for processing several successive operation windows,
- Figure 12 shows an example of the used operation modes for successive windows in the first or second embodiment, according to the pipelining mode,

- Figure 13 shows an example of the used operation modes for successive windows in the embodiment of figure 9, in the pipelining mode,
- Figure 14 shows a hybrid embodiment between first and second embodiments, establishing a trade-off for the prediction horizon Hp to apply for the scheduling through a negotiation between the CNC and the 5GS.
- Figure 15 shows schematically an entity CNC of the time sensitive network TSN to implement the method presented above, in a system including a 5GS cellular network, according to an example of embodiment.

Hereafter the wording "CNC" or "CNC node" relates to an entity in charge of computing the data flows scheduling of the bridges of a Time Sensitive Network (TSN). It can be for example (but not limited to) a Centralized Network Configuration node of the TSN.

One of the bridges of the TSN is a wireless bridge involving a radiofrequency cellular network (a 5G network for example). The wording "5GS" relates to this radiofrequency cellular network, typically including some radio components and a core network component. The 5GS includes an entity which is in charge of exchanging messages with the CNC node so as to perform the computing of the data flows scheduling of the bridges, named also the "bridge scheduling". Hereafter, the wording "5G" or "5G network" aims at such a radiofrequency cellular network (being of 5G type or of any other network generation).

In the approach described hereafter, compared to the prior-art situation shown in figure 3, a current accurate Quality of Service (QoS) condition of the 5G network is assessed for a current operation window. A time parameter can therefore be introduced in the operation window determination (which is supposed then to be valid for a given duration), for the bridge scheduling, as illustrated in figure 4.

Indeed, since the Quality of Service (QoS) in the radiofrequency cellular network can vary depending on the wireless network's conditions, including terminals positions, a QoS can be predicted for a finite time period of validity. The prediction is called "QoS capabilities prediction" below and noted "Qp" and its time period of validity is called "prediction horizon" and noted "Hp".

Several parameters in the 5G network have an impact on the fact that the scheduling computed with some bridge QoS capabilities, based on the QoS capabilities prediction from the 5GS, will remain valid (and by consequence ensure an overall guaranteed control of the end-to-end delays) during an operation window for TSN end stations possibly embedded in moving 5G terminals. According to the scenario, some of these parameters are not tuneable (and may be pre-determined, measurable, fixed or variable but calculated at once), while the others can be tuned. These parameters are at least characterizing:

- The time required to collect QoS capabilities prediction from the 5G elements, and their prediction horizon. The horizon may not be provided at the time a QoS capabilities prediction is asked for, and can be collected for example later for a future computation, and in this case the available QoS capabilities prediction (obtained before a current cycle) can be used. Finally, the QoS capabilities can be collected at a lower pace than the scheduling computation.
- The time required to obtain the related TSN bridges QoS capabilities and to compute the TSN scheduling at the CNC node.
- The time to configure the TSN bridges accordingly.
- The time and duration of the operation window during which the TSN bridges configuration is applied, preferably according to the prediction horizon of the collected QoS capabilities prediction.

An embodiment proposes then a method for:

- collecting, from the different network elements in the TSN (including the 5GS), the values of the aforesaid non-tuneable parameters,
- computing the tuneable parameters for ensuring a guaranteed quality of service in the operation window,
- applying the corresponding configuration for the TSN data transmission during the operation window.

It is thus proposed to tune the duration of the sequential steps in order to ensure a good operation of the TSN over the 5G involving mobility of terminals.

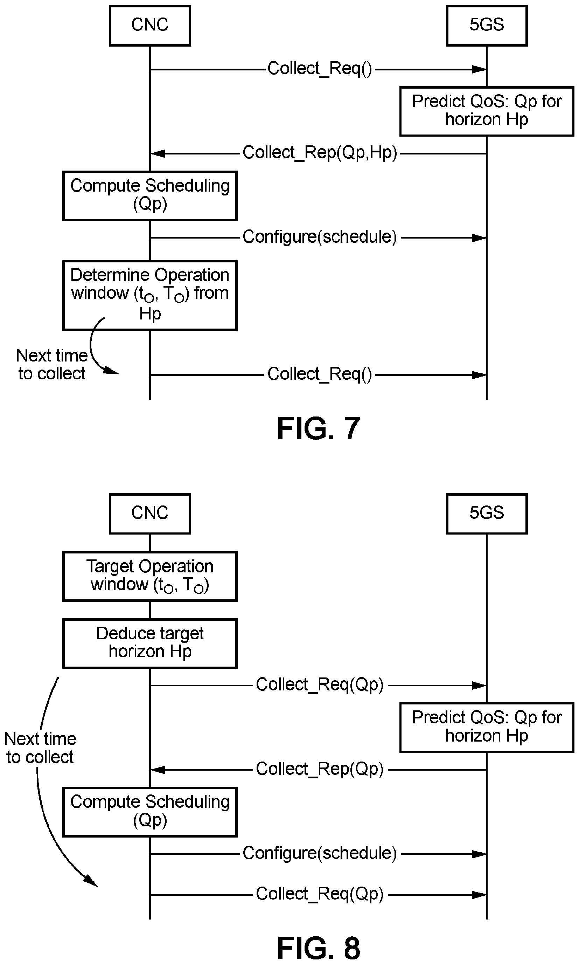

In a first embodiment shown on figure 7, the wireless network feeds back the QoS capabilities prediction and the prediction horizon for each device (the time during which the QoS prediction remains guaranteed, as predicted by the 5GS), and the operation window duration is adapted to ensure that the computed scheduling will operate during a time window compatible with the lowest prediction horizon found in the 5G.

In a second embodiment shown on figure 8, the 5GS can predict the QoS capabilities for any given prediction horizon. The prediction horizon Hp is required from the CNC for operating during a target operation window and is informed to the 5GS for its computation of the QoS capabilities prediction.

Within this horizon Hp, the CNC will have to compute the bridge scheduling and transmit the configuration orders to the bridges to ensure the data packets transmission according to the scheduling until the horizon duration is ended. The end of the prediction horizon duration can define thus a next time to collect QoS capability predictions and schedule the next future bridge scheduling.

In the second embodiment typically, if the imposed horizon Hp is too long, the QoS capability prediction can give a poor QoS, as it would be the only one that can be guaranteed during a long horizon, and the prediction would be suboptimal. On the other hand, a short horizon Hp would possibly enable to guarantee a good QoS but might not allow the CNC to have sufficient time to compute the bridge scheduling efficiently.

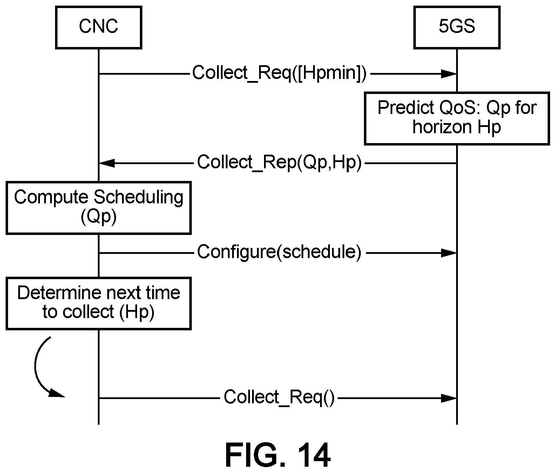

In a hybrid embodiment between first and second embodiments (shown in figure 14), the CNC imposes a minimum value Hpmin of the prediction horizon Hp to the 5GS so as to have sufficient time for the bridge scheduling inter alia. The 5GS can base its QoS capability prediction on this minimum horizon. The 5GS can also estimate a QoS capability for a longer horizon Hp, for example when radio network situation is stable enough thanks to slow moving terminals or a when it has a small number of data flows to handle, leading to a limited radio resource usage. Then the 5GS transmits this longer prediction horizon Hp with the associated QoS capability prediction to the CNC, which allows the CNC to have more than the minimum horizon Hpmin for the scheduling.

Finally, this hybrid embodiment establishes a trade-off between the first and second embodiments for the prediction horizon to apply for the scheduling thanks to a "negotiation" between the CNC and the 5GS.

According to the present description and in any of these embodiments, the CNC node adapts the scheduling computation time, for example by bounding the maximum computation time. The maximum computation time is computed by taking into account the target operation window duration and of course the QoS capability prediction horizon of the 5G network.

A more detailed embodiment is presented below. In order to set up the operation window, the following sequential steps is usually required:

- Step D: Obtaining the information related to the QoS capabilities prediction Qp of at least one datalink (the radio link between a terminal and its serving base station), that can be computed in the 5GS either at a terminal, in an eNodeB or a gNB or in any other 5G Core Network element (called generically "5GS" here):

    ◦ $T_D$ and $t_D$ are respectively the duration and starting time of this information data collection phase, as shown on figure 5,
    ◦ $T_P$ and $t_p$ are respectively the duration and starting time of the horizon window of the information related to the QoS capabilities prediction Qp of at least one data link. In practice, the values $T_P$ and $t_p$ are related for example to the radio link condition of the data link, which is varying, for example, because of the terminal mobility or changing cell load.

- Step S: Computing, at the CNC node, a scheduling from the obtained QoS capabilities prediction Qp:

    ◦ Ts and ts are respectively the duration and starting time of the computation phase of the scheduling in the CNC node.

- Step C: Configuring, by the CNC node, the TSN elements according to the computed scheduling:

    ◦ Tc and $t_c$ are respectively the duration and starting time of the TSN devices configuration phase.

- Step O: Sending data packets through the configured TSN elements according to the computed scheduling:

    ◦ $T_o$ and $t_o$ are respectively the duration and starting time of the operation window during which the TSN devices use the computed and configured scheduling of steps S and C.

Thus, in order to achieve a correct ordering of operations and satisfy the availability of information for computing, the following properties must be fulfilled, as illustrated in figure 5:

- Condition $t_D + T_D \le t_s$ ensures that the information related to the QoS capabilities prediction Qp of at least one data link has been received before scheduling computation starts. If no information is received for some of the data links at stake, the last received information for these data links is used instead.
- Condition $t_s + T_S \le t_c$ ensures that the scheduling computation has ended before the configuration of the TSN network is performed.
- Condition $t_c + T_C \le t_o$ ensures that the operation window starts after the configuration of the TSN elements has ended.
- Condition $t_P \le t_o$ ensures that the horizon window of the information used for computing the scheduling starts before the operation window start.

- Condition $t_O+T_O \leq t_p+T_P$ ensures that the operation window ends before the end of the horizon window of the information used for computing the scheduling.

It appears then that the above listed parameters are interdependent.

A check of the conditions can be done by one of the involved network elements (for example a dedicated function in the CNC or a dedicated node in the TSN) after gathering the required information, and a feedback is provided as to whether the configuration ensures the validity of the scheduling computed from the QoS capabilities prediction during the operation window.

In the approach detailed below, a computation of the tuneable parameters is performed according to the non-tuneable ones, such that the validity of the scheduling computed from the QoS capabilities prediction is ensured during the operation window. This determination of parameters (DoP) can be executed at different times and by different network elements according to the embodiments.

Some of the conditions are ensured by the definition of a protocol involving that:

- The scheduling is computed only after receiving a message from the element performing the DoP (which ensures that $t_D+T_D \leq t_S$ is always satisfied)
- The configuration is started by the CNC only after it finishes the scheduling computation (which ensures that $t_S+T_S \leq t_c$ is always satisfied)
- The operation window only starts after the configuration has ended, by command of the CNC (which ensures that $t_c+T_c \leq t_O$ is always satisfied)

In addition, the gap in between the operations is typically a waiting time that should be included in the $T_D$, Ts, Tc values. Thus, it is assumed in the following that no gap exists between the steps, which involves that $t_D+T_D=t_S$, $t_S+T_S=t_c$, $t_C+T_C=t_O$.

Finally, the system is parametrized by $t_D$, $T_D$, $T_S$, $T_C$, $T_O$ and $T_P$ and $t_P$ and the two following constraints must be satisfied:

- Condition $t_P \leq$ to ensures that the horizon of the QoS capabilities prediction used for computing the scheduling starts before the operation window start.
- Condition $t_O+T_O \leq t_P+T_P$ ensures that the operation window ends before the end of the horizon of the QoS capabilities prediction information used for computing the scheduling.

The timeline of these sequential steps, with no time gap between the steps, is shown in **Erreur ! Source du renvoi introuvable..**

The 5GS (an entity of the core network, or an eNodeB, or a base station, etc.) is in charge of collecting the QoS predictions Qp (and possibly their horizons Hp) among all the wireless devices that can intervene in the next transmission session.

Therefore, as a remark, when several $T_P$ and $t_P$ values are collected for the DoP for several data links, a combination of the values can be used to determine a single representative $T_P$ and $t_P$. For example, when the worst-case situation is considered, $\max(\{t_P\})$ is used as a representative value of $t_P$, and $\min(\{t_P+T_P\})-\max(\{t_P\})$ can be used as a representative value of $T_P$.

Regarding the obtained parameters, $T_D$ is the duration of the collection of QoS capabilities prediction. During this phase, the network element computing the DoP typically sends a message to one or several 5G network elements and receives in response the QoS capabilities prediction. $T_D$ is typically a non-tuneable parameter, and it can be estimated considering the worst-case response time of the different bridges and the number of bridges in the network.

Tc is the duration of configuration phase. During this phase, the CNC node sends to each bridge of the network a schedule for the data flows. $T_C$ is typically a non-tuneable parameter, and it can be estimated considering the worst-case response time of the different bridges and the number of bridges in the network.

Ts is the duration for computing the scheduling. In one embodiment, this duration is fixed, and determined for example by measuring in advance the maximum computation time of the CNC node. In an alternative embodiment developed hereafter, the parameter Ts can be a tuneable parameter that can be calculated as described below.

$T_P$ is QoS capability prediction duration, a parameter of the prediction horizon Hp. $T_P$ can be a tuneable or a non-tuneable parameter depending on the embodiment.

In the first embodiment discussed above, the values $T_C$, $T_D$, $T_S$ are non-tuneable and obtained beforehand. The parameter $t_O$ is one instance of a repeating set of operation windows of duration To to be determined. The parameter $t_D$ is determined by $t_D=t_O-(T_C+T_D+T_S)$. For simplification, it is assumed that $t_P=t_D$ (the prediction QoS request being assumed to start from the request time). The prediction horizon $T_P$ is collected from the 5GS by the CNC node, and is therefore, in this first embodiment, imposed to the CNC node.

The duration $T_O$ is computed by $T_O = T_P - (T_C + T_O + T_S)$. $T_O$ is computed according to the obtained $T_P$.

An example of the first embodiment is presented in figure 7 where Hp is the prediction horizon of QoS capabilities prediction. Typically, Hp is a couple $([t_{P]}, T_P)$ where $t_P$ can be optional. When $t_P$ is not provided, it means that the prediction starts from the current time, for example the time of reception of the collection request message. Otherwise ($t_P$ and $t_D$ are not equal), the 5GS provides in addition to the prediction horizon duration $T_P$ its starting time $t_p$.

The operation window can be further used to adapt the configuration loop duration to the prediction horizon provided by the 5GS. For example, the next time to start a new collection request is determined by considering the next operation window start at the end of previous operation window:

$$t_O(i+1) = t_O(i) + T_O(i)$$

Hence, if for example the mobile devices are moving fast in a given part of the factory, the radio conditions could evolve quickly. The duration of an accurate prediction of QoS capabilities can be then shorter, and the configuration loop is adapted accordingly in order to always have an optimised scheduling. When radio conditions are more stable, QoS capabilities prediction horizon could be farther. The configuration loop can evolve then accordingly, saving signalling and computational resources.

A possible constraint is that the operation window determination might happen after the reception of the collection response. Hence it could take place after of before the scheduling computation.

In the second embodiment, the values $T_D$, $T_S$, $T_C$ are non-tuneable and obtained beforehand. The parameter $t_O$ is one instance of a repeating set of operation windows of duration To which is fixed (pre-determined). The parameter $t_D$ is determined by $t_D = t_O - (T_C + T_D + T_S)$. For simplification, it is assumed that $t_P = t_D$ to compute a minimum prediction horizon $T_P$ as $T_P = T_O - (T_C + T_D + T_S)$. The parameter $T_P$ is provided to the 5GS which takes it into account for providing back QoS capability predictions that can be guaranteed to remain valid during the horizon imposed to the 5GS.

An example of the second embodiment is described in Erreur ! Source du renvoi introuvable., where Hp is the target prediction horizon of QoS capabilities prediction. Typically, Hp is a couple $([t_{P]}, T_P)$, $t_P$ being optional. When $t_P$ is not provided, it means that the prediction should start from the current time, for example the time of reception of the collection request message ($t_P$ and $t_D$ are equal). If provided, $t_P$ can be comprised between $t_D$ (prediction QoS request starting from the request time) and $t_O$ (prediction QoS request starting from the beginning of the target operation window).

In a possible third embodiment, the values $T_C$, $T_D$ are non-tuneable and obtained beforehand. $T_P$ and $T_S$ are to be determined. For simplification, it is assumed that the parameter $t_P = t_D$ (the prediction QoS request starting from the request time). The prediction horizon $T_P$ is collected from the 5GS by the CNC node. Then $T_S$ is computed according to the obtained $T_P$. The CNC node must compute the scheduling within this time Ts.

An example of the third embodiment is presented in Erreur! Source du renvoi introuvable., where Hp is the prediction horizon of QoS capabilities prediction. Typically, Hp is a couple $([t_{P]}, T_P)$, $t_P$ being optional. When $t_P$ is not provided, it means that the prediction starts from the current time, for example the time of reception of the collection request message.

In this third embodiment typically, the next time to collect Qp (and possibly Hp) from the 5GS can be imposed by a fixed duration of the operation window To, i.e. independently from the current prediction horizon Hp. Therefore, a constraint is to be fulfilled by the CNC to compute the scheduling during a restricted remaining computation period Ts, within one operation window.

Indeed, time constraints due to scheduling computations are to be considered in such a situation. The scheduling computation itself has a time constraint Ts, and the optimisation algorithm used for scheduling computation shall provide a result within a given time limit.

This can be achieved:

- by using optimization algorithms which computation can be stopped at any time such as genetic algorithms. In this case, the latest best solution obtained is the result used for the scheduling,

- or by adapting the computation resource dynamically to fulfil the computation time limit.

Additionally, the optimization algorithm can start its search from the previous solution instead of starting from scratch. Hence, the convergence of the algorithm is faster.

In a worst-case scenario where the scheduling computation could not be made because of an insufficient time left to the CNC, an infinite prediction horizon Hp giving a suboptimal Qp like in the prior art can be used in exceptional circumstances.

An alternative algorithm can be a learning algorithm using typically artificial intelligence so as to provide:

- A first preliminary step where the algorithm learns how to compute, offline for example, typical scheduling configurations based on given predictions Qp (or vector of predictions Qpi of each wireless device involved in the communication cycle), and related horizons Hp,
- And a second current step, performed online and especially with time constraints, where the algorithm determines the scheduling based on precedent observations with a same or similar couple (Qp, Hp) (or vector (Qpi, Hp)).

For the implementation of the scheduling computation and the use of its result, the CNC is provided with data flows characteristics and requirements, e.g. source, destination, maximum transmission delay, priority. The scheduling computation shall provide a scheduling result that fulfills the data flow requirements taking into account the QoS capabilities indicated by the network devices.

As the QoS capabilities indicated by the 5GS can evolve at each operation window, the scheduling result might evolve as well. This means that the end-to-end transmission times of the data flows could evolve among the different operation windows.

It may happen that, with a given QoS capability predictions provided, some data flows can no more be accepted in the operation window. If the scheduler can compute several schedules with different priorities, then it moves data flows among the different schedules depending on the data flow priorities, so that the higher-priority schedule at least fulfills the data flow requirements. Alternatively, data flows with lower priorities could be put as a "best-effort" data flows for the duration of the operation window.

Typically, the third embodiment is characterized by a scheduling computation with a time constraint. Hence, the scheduling result will depend on QoS capability predictions, but also on the time limit imposed to the algorithm. If the time limit is large, then the scheduling result is optimized, corresponding to the best solution the algorithm can find. When the time limit becomes a real constraint, then the result provided within the time limit could be a less optimized solution, leading possibly to an impossibility to accept all the data flows. In this case, one solution is to dynamically adapt the computation resource. Another possibility is to assign priorities to the data flows as described above.

Of course, some of the embodiments above can be combined together. Indeed, the embodiments above are not exclusive. For example:

- The CNC node can have a target minimum operation window (in embodiments 2 and 3),
- The CNC node can provide a minimum horizon prediction to 5GS (in embodiment 2 and hybrid embodiment),
- 5GS can provide back QoS predictions for a prediction horizon Hp (above a minimum horizon threshold typically), depending on cell load, device location and mobility (in embodiments 1, 2, and 3),
- The CNC node can determine from Hp a time constraint for the scheduling computation, if necessary (in embodiment 3),
- The operation window can be updated (in embodiment 1).

Hence, the typical exchanged data messages to collect QoS capabilities are the following:

- From the CNC node to 5GS: Collect_Req(([Hp])
- From 5GS to the CNC node: Collect_Rep(Qp, Hp)

with Hp=$([t_{P]}, T_P)$

Instead of a regular collect, an "asynchronous" collect can be performed. In the previous embodiments indeed, it is assumed that the CNC sends a message to the 5GS each time it wants to start a collect cycle, and the 5GS provides its response upon reception of the request.

The collect can also be asynchronous, in another embodiment: the CNC node sends a first message indicating a request to get QoS capability prediction and prediction horizon. The 5GS can then send its response without other solicitation from the CNC node. For example, the 5GS can send new values when it estimates that the radio conditions have changed enough, and that it has a better prediction to provide. In this case, the CNC node triggers the determination of the new operation window from the reception of new QoS capability prediction and prediction horizon from the 5GS.

More generally, the description above presents the sequential steps for one operation window. In practice, it is reasonable to contemplate that the operation windows occur periodically and successively. In this case, additional constraints can be satisfied for ensuring no overlap in the pipelining of the sequential steps, as described in the following.

It is considered that the next operation window starts at last at the end of the previous one, and therefore:

$$t^{i+1}_O \leq t^i_O + T^i_O$$

The next horizon window starting at $t^{i+1}_P$ can start between $t^i_D$ and $t^{i+1}_O$

To have a continuous and non-overlapping valid operation mode, it can be decided to set:

$$t^{i+1}_O = t^i_O + T^i_O.$$

For continuous operation, t(i+1) can be set before the end of the current window. Setting it at the end can be seen as an optimization of window duration. But if, for example, the CNC node receives a new (Qp,Hp) asynchronous event, it can terminate window i before its end.

Depending on the previous embodiments, constraints shall remain valid.

Two operating modes can be defined from the beginning of $t^{i+1}_D$:

- A so-called "pipelining" operating mode if $t^{i+1}_D \geq t^i_O$, where next window i+1 steps D, S and C are done during previous window i step O as shown in figure 10, and

- A so-called "parallel" operating mode if $t^{i+1}_D \leq t^i_O$ and $t^{i+1}_D \geq t^i_D$, where one or more of next window i+1 steps D, S and C can be done during one or more D, S, C and O previous window i steps as shown in figure 11. Here, the CNC node computes the bridge scheduling for a current operation cycle and launches in parallel the collect of prediction Qp (and eventually its corresponding horizon Hp in the first or hybrid embodiment) for the next operation cycle.

Depending on the operating mode, some constraints for previous embodiments need to be valid.

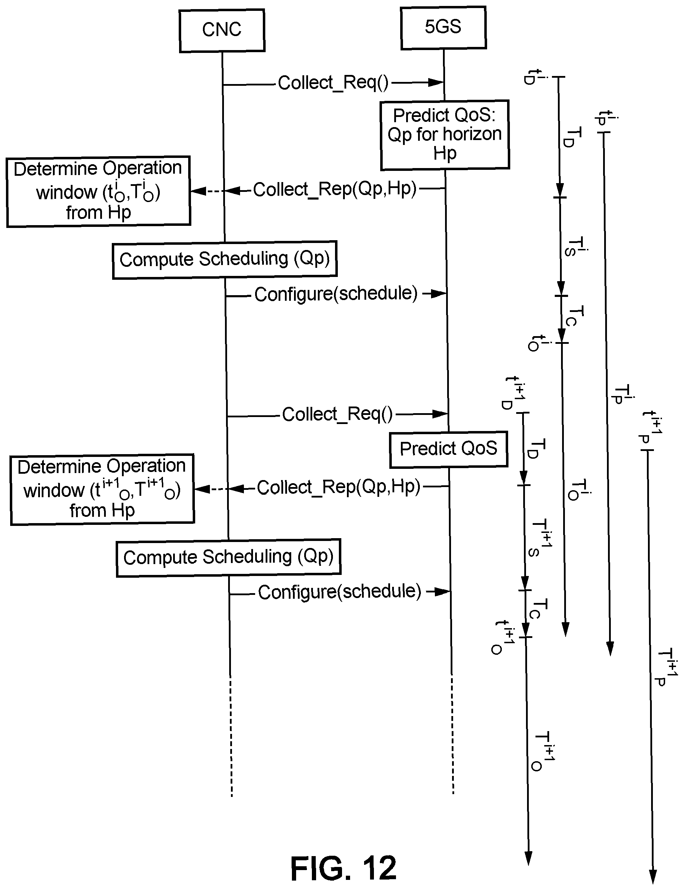

Typically, for the first and second embodiments, a successive windows operation is presented in figure 12. The collecting time is calculated as $t^{i+1}_D = t^{i+1}_O - (T_C + T_D + T_S)$ where Ts = T's = $T^{i+1}_S$ and $t^{i+1}_O = t^i_O + T^i_O$ in a continuous operation mode.

Then, depending on when the next collecting time occurs, two cases can be contemplated:

- The pipelining operating mode when $t^{i+1}_D \geq t^iO$ with:

  •

$$T^i_O \leq T^i_P - (t^i_P - t^i_O)$$

  (where $T^i_P$ must include $T^i_O$), and

  •

$$T^i_O \geq T_D + T_S + T_C$$

  (where $T^i_O$ must thus include next window steps D, S and C).

- The parallel operating mode when $t^{i+1}_D \geq t^i_D + T_D$ and $t^{i+1}_D \leq t^i_O$, where:

  ▪ $T^i_P$ is known at the end of collection request,
  ▪ $T^i_O \leq T^i_P - (t^i_P - t^i_D)$ if $t^{i+1}_D = t^i_D + T_D$, and
  ▪ $T^i_O \geq T_D + Ts + Tc - (Ts + Tc)$ then $T^i_O \geq T_D$ if $t^{i+1}_D = t^i_D + T_D$

  And when $t^{i+1}_D \geq t^i_D$, $t^{i+1}_D \leq t^i_D + T_D$ and $t^{i+1}_D \leq t^i_O$, where:

  ▪ $T^i_O \leq T^i_P - (T_D + T_S + T_C)$ if $t^{i+1}_D = t^i_D$

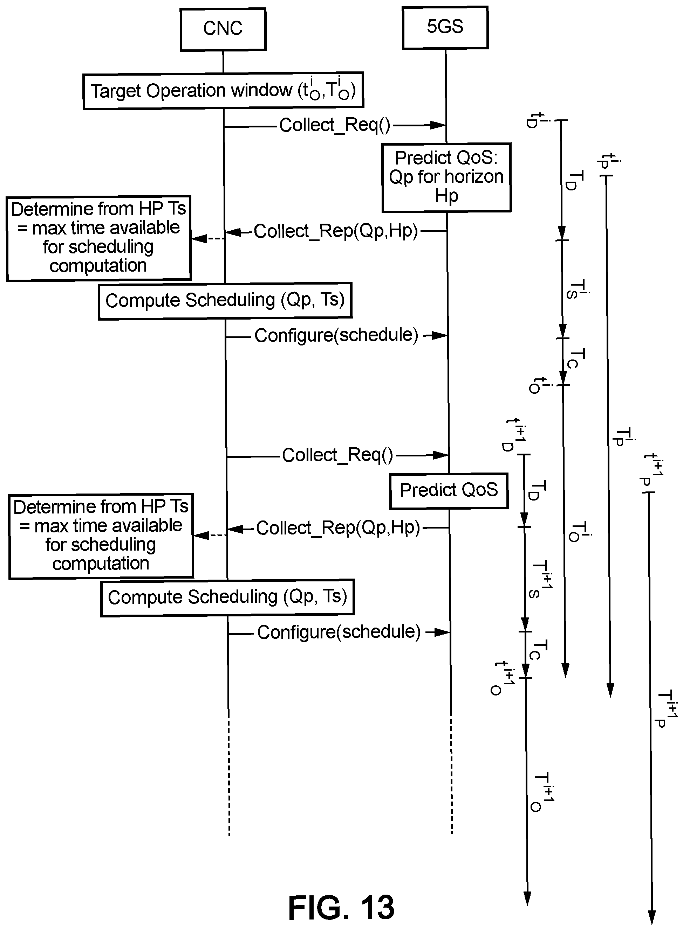

Now regarding the third embodiment, a successive windows operation is presented in figure 13 (implemented in this example according to the aforesaid pipelining mode), where the scheduling times $T^i_S$ and $T^{i+1}_S$ depend on $T^i_P$ and $T^{i+1}_P$.

$$t^{i+1}_O = t^i_O + T^i_O$$

in a continuous operation mode.

$T^i_O$ must be determined.

Depending on when the next collecting time occurs two cases can be contemplated:

- A pipelining operating mode when $t^{i+1}{}_D \geq t^i{}_O$:

  •

$$T^i{}_O \leq T^i{}_P - (t^i{}_P - t^i{}_O)$$

  (where $T^i{}_P$ must include $T^i{}_O$)

  •

$$T^i{}_O \geq T_D + T^{i+1}{}_S + T_C \text{ then } T^{i+1}{}_S \leq T^i{}_O - (T_D + T_C)$$

  ( where $T^i{}_O$ must include next window steps D, S and C)

  •

$$T^i{}_P + (t^i{}_P - t^i{}_D) \geq T^i{}_S + T^{i+1}{}_S + 2T_D + 2T_C$$

  T's and $T^{i+1}{}_S$ must be balanced between current window steps and next window steps,

  $T^{i+1}{}_S$ should be set to a minimum value $T_{Smin}$, and

- The parallel operating mode, where:

  • If $t^{i+1}{}_D \geq t^i{}_D + T_D$ and $t^{i+1}{}_D \leq t^i{}_O$ :

    ▪ $T^i{}_P$ is known at the end of collection request,
    ▪ $T^i{}_O \leq T^i{}_P - (t^i{}_P - t^i{}_D)$ if $t^{i+1}{}_D = t^i{}_D + T_D$
    ▪ $T^i{}_O + T_C + T^i{}_S \geq T_D + T^{i+1}{}_S + Tc$
    ▪ If $T^i{}_S = T^{i+1}{}_S = T_S$, then $T^i{}_O \geq T_D$

  • If $t^{i+1}{}_D \geq t^i{}_D$, $t^{i+1}{}_D \leq t^i{}_D + T_D$ and $t^{i+1}{}_D \leq t^i{}_O$ :

$$T^i{}_O \leq T^i{}_P - (T_D + T^i{}_S + T_C) \text{ and } T^i{}_O \leq T^i{}_P - (T_D + T^{i+1}{}_S + T_C) \text{ if } t^{i+1}{}_D = t^i{}_D$$

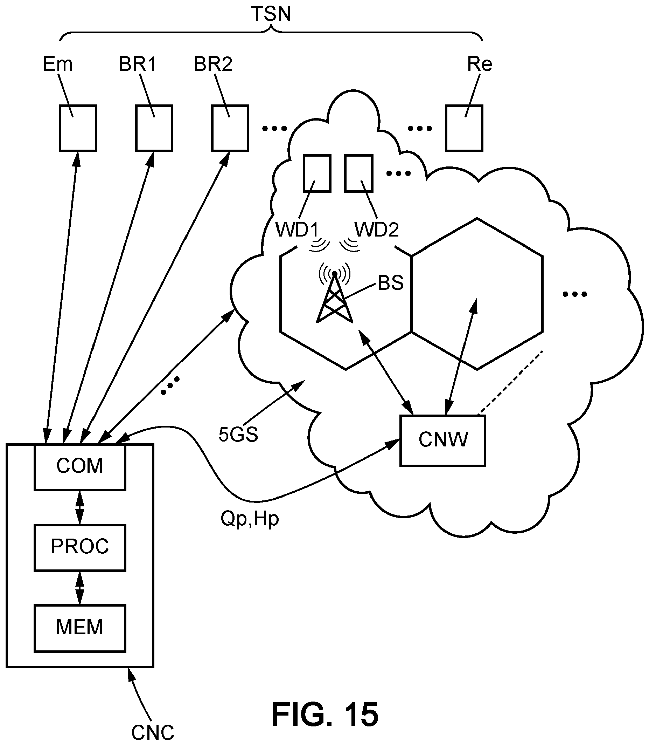

Figure 15 shows schematically a time sensitive network TSN where an emitter Em sends data packets to a receiver Re through bridges BR1, BR2, ..., of the network TSN. One of these bridges is a wireless bridge and can be for example a radiofrequency cellular network 5GS where one or several wireless devices WD1, WD2, ..., participate to the data transmission between the emitter and the receiver. As shown in the example of figure 15 for a cellular network, the wireless devices are connected to one or several base stations BS which can be connected to a core network CNW. The 5GS network (for example an entity of the core network) can collect the QoS predictions Qpi (and possibly also their horizons Hpi, according to the aforesaid first embodiment) of the wireless devices involved in the data transmission between the emitter and the receiver, and can determine for example a minimum prediction horizon Hp among the involved devices (based for example on the one having the shortest prediction horizon).

An entity of the network TSN such as a Centralized Network Configuration node CNC can then compute a schedule of the transmission times of the TSN network bridges using, according to the present description, the prediction horizon Hp of the wireless network 5GS (provided for example by the core network CNW), when the wireless network is one of the bridges.

To that end, the entity CNC comprises a processing unit including at least:

- A communication interface COM to receive at least from the 5GS entity the prediction Qp (and possibly its horizon Hp), and to send scheduling data to the TSN bridges,
- A memory MEM storing at least instructions of a computer program causing the implementation of the method described above, when read by a processor PROC, and

- Such a processor PROC, connected to the memory MEM to execute the computer program instructions so as to compute the bridge scheduling and the corresponding transmission times according to the prediction Qp and its horizon Hp, and to the interface COM to send the transmission times to the TSN bridges.

**Claims**

1. A method performed by an entity of a time sensitive network (TSN), to schedule transmission times of intermediary bridges between end stations communicating with each other via the time sensitive network (TSN), at least one bridge of said intermediary bridges being a radiofrequency bridge involving a radiofrequency cellular network (5GS), Wherein said entity (CNC) of the time sensitive network (TSN) obtains from the radiofrequency cellular network (5GS) at least a capability prediction Qp of a Quality of Service (QoS) of said wireless bridge, and schedules said transmission times based on said capability prediction Qp and further on a prediction horizon Hp corresponding to a validity duration of the QoS capability prediction Qp.

2. The method of claim 1, wherein the entity transmits to the radiofrequency cellular network (5GS):

   - a first request to obtain at least said QoS capability prediction Qp, and
   - a second request ("Configure(schedule)") to configure said wireless bridge according to said scheduled transmission times,

   and wherein the transmission of the request for QoS capability prediction Qp precedes (to) the transmission of the request to configure the wireless bridge ($t_C$) within an operation cycle ending with a period (To) of effective data transmission between the end stations, said period (To) ending before the duration (Tp) of the prediction horizon Hp given for said operation cycle.

3. The method according to anyone of the preceding claims, wherein said entity (CNC):

   - obtains from the radiofrequency cellular network (5GS) both the QoS capability prediction Qp and the prediction horizon Hp during which the radiofrequency cellular network (5GS) guarantees said QoS capability prediction Qp, and
   - schedules said transmission times based on the prediction Qp and its horizon Hp provided by the radiofrequency cellular network (5GS).

4. The method according to anyone of claims 1 and 2, wherein said entity (CNC):

   - imposes to the radiofrequency cellular network (5GS) a prediction horizon Hp corresponding to a validity duration during which the QoS capability prediction Qp of said wireless bridge is to be guaranteed by the radiofrequency cellular network (5GS),
   - receives from the radiofrequency cellular network (5GS) a QoS capability prediction Qp corresponding to the imposed prediction horizon Hp, and
   - schedules said transmission times based on the imposed prediction horizon Hp and on the received QoS capability prediction Qp.

5. The method according to anyone of claims 1 and 2, wherein said entity (CNC):

   - imposes to the radiofrequency cellular network (5GS) a minimum value of a prediction horizon Hp corresponding to a validity duration during which the QoS capability prediction Qp of said wireless bridge is guaranteed by the radiofrequency cellular network (5GS),
   - receives from the radiofrequency cellular network (5GS) a negotiated value of a prediction horizon Hp corresponding to a validity duration during which the QoS capability prediction Qp of said wireless bridge can be guaranteed by the radiofrequency cellular network (5GS), said negotiated value being equal to or higher than the minimum value, and
   - schedules said transmission times based on the negotiated value of the prediction horizon Hp and on the guaranteed QoS capability prediction Qp.

6. The method according to any one of the preceding claims, wherein the entity (CNC) of the time sensitive network (TSN) operates according to successive operation cycles, and in one and same operation cycle:

- during a data obtaining period ($T_D$):

  * transmits a request to an entity of the radiofrequency cellular network (5GS) to obtain data of at least the QoS capability prediction Qp of the wireless bridge, and
  * obtains a prediction horizon Hp corresponding to a duration of validity of the obtained QoS capability prediction Qp,

  - during a scheduling period (Ts), computes a schedule of said transmission times based on said QoS capability prediction Qp and its prediction horizon Hp,

said scheduling period ($T_S$) being followed, in one operation cycle, by:

  - a configuration period (Tc) corresponding to a time taken by the entity (CNC) of the time sensitive network (TSN) to transmit configuration data to the intermediary bridges to prepare an effective data transmission between the end stations, and for the bridges to receive the transmitted configuration data and to be hence configured to follow the scheduled transmission times, and by
  - a transmission period (To) of effective data transmission between the end stations according to the scheduled transmission times, the transmission period ($T_o$) ending before the end of validity of the QoS capability prediction Qp.

7. The method according to claim 6, wherein the transmission period (To) of a current operation cycle depends on the prediction horizon Hp given for said current operation cycle, each operation cycle having thereby a total duration depending on the prediction horizon Hp given for said each operation cycle.

8. The method according to any one of claims 6 and 7, wherein the entity (CNC) of the time sensitive network fulfils a constraint to compute the schedule of said transmission times during the scheduling period (Ts) remaining within a given operation cycle, while taking into account said data obtaining period ($T_D$), said configuration period (Tc) and said transmission period (To) of said given operation cycle.

9. The method according to claim 8, wherein the entity (CNC) of the time sensitive network (TSN) uses an optimization algorithm to compute the scheduling of the transmission times in order to fulfil said constraint of a remaining time within said scheduling period (Ts), said optimization algorithm being stopped at the end of the scheduling period to provide a latest best solution obtained as a result to use for the scheduling.

10. The method of claim 9, wherein, in a current operation cycle, the optimization algorithm starts a scheduling computation from a previous scheduling computation obtained for a previous operation cycle.

11. The method according to any one of claims 6 to 10, wherein the entity (CNC) of the time sensitive network (TSN) transmits said request of the QoS capability prediction Qp for a current operation cycle at least before the end of the effective data transmission period ($T_o$) of a previous operation cycle preceding said current operation cycle.

12. The method according to any one of claims 6 to 11, wherein the entity (CNC) of the time sensitive network (TSN) transmits said request of the QoS capability prediction Qp for a current operation cycle before the end of a previous operation cycle preceding said current operation cycle, and after the data obtaining period ($T_D$) of the previous operation cycle.

13. A computer program comprising instructions causing the implementation of the method according to any one of the precedent claims, when said instructions are executed by a processing unit.

14. An entity of a time sensitive network (TSN), comprising a processing unit to perform the method as claimed in any one of claims 1 to 12.

15. The entity of claim 14, configured to be incorporated in a Centralized Network Configuration (CNC) node of the time sensitive network (TSN).

FIG. 1

FIG. 2

EP 4 604 607 A1

Long term approach (baseline)

**FIG. 3**

**FIG. 4**

**FIG. 5**

**FIG. 6**

**FIG. 7**

**FIG. 8**

FIG. 9

$T^i_P$

$T^i_O$

$T^{i+1}_P$

$T^{i+1}_O$

$t^i_P$

$T^i_S$ $T_D$ $T_C$ $t^i_O$

$t^i_D$

$t^{i+1}_P$

$T^{i+1}_S$ $T_C$ $t^{i+1}_O$

$T_D$

$t^{i+1}_D$

**FIG. 10**

$T^i_P$

$T^i_O$

$T^{i+1}_P$

$T^{i+1}_O$

$t^i_P$

$T^i_S$ $T_D$ $T_C$ $t^i_O$

$t^i_D$

$t^{i+1}_P$

$T^{i+1}_S$ $T_C$ $t^{i+1}_O$

$T_D$

$t^{i+1}_D$

**FIG. 11**

## FIG. 12

**FIG. 13**

FIG. 14

FIG. 15

| | Europäisches Patentamt<br>European Patent Office<br>Office européen des brevets | **EUROPEAN SEARCH REPORT** | **Application Number**<br>EP 24 30 5257 |

### DOCUMENTS CONSIDERED TO BE RELEVANT

| Category | Citation of document with indication, where appropriate,<br>of relevant passages | Relevant<br>to claim | CLASSIFICATION OF THE<br>APPLICATION (IPC) |
|---|---|---|---|
| X | US 2023/284077 A1 (PATEROMICHELAKIS EMMANOUIL [DE])<br>7 September 2023 (2023-09-07)<br>* paragraph [0045] - paragraph [0048]; figures 1-5 *<br>* paragraph [0071] - paragraph [0086] *<br>* paragraph [0098] - paragraph [0110] *<br>* paragraph [0115] *<br>* paragraph [0128] - paragraph [0139] *<br>* paragraph [0158] - paragraph [0167] *<br>* paragraph [0182] - paragraph [0188] *<br>- - - - - | 1-15 | INV.<br>H04W28/02<br>H04W72/543<br>H04L47/2491<br><br>ADD.<br>H04W72/0446 |
| X<br>A | EP 4 187 960 A1 (HUAWEI TECH CO LTD [CN])<br>31 May 2023 (2023-05-31)<br>* paragraph [0007] - paragraph [0009]; figures 1-5, 7 *<br>* paragraph [0074] *<br>* paragraph [0136] *<br>* paragraph [0137] *<br>* paragraph [0156] - paragraph [0159] *<br>* paragraph [0166] - paragraph [0168] *<br>* paragraph [0202] *<br>* paragraph [0218] - paragraph [0223] *<br>* paragraph [0226] - paragraph [0227] *<br>- - - - - | 1,13-15<br><br>2-12 | |
| A | WO 2021/067130 A1 (NOKIA TECHNOLOGIES OY [FI]; NOKIA AMERICA CORP [US])<br>8 April 2021 (2021-04-08)<br>* paragraph [0004] - paragraph [0007]; figures 2, 3 *<br>* paragraph [0020] - paragraph [0024] *<br>* paragraph [0039] - paragraph [0043] *<br>- - - - - <br>-/-- | 1-15 | |

**TECHNICAL FIELDS SEARCHED (IPC)**

H04W
H04L

The present search report has been drawn up for all claims

| Place of search | Date of completion of the search | Examiner |
|---|---|---|
| The Hague | 19 June 2024 | Tortelli, Michele |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 4 068 706 A1 (MITSUBISHI ELECTRIC R&D CT EUROPE BV [NL] ET AL.) 5 October 2022 (2022-10-05) * paragraph [0023] * * paragraph [0029] - paragraph [0032] * * paragraph [0054] * * paragraph [0067] - paragraph [0070] * ----- | 1-15 | |

TECHNICAL FIELDS
SEARCHED (IPC)

The present search report has been drawn up for all claims

| Place of search | Date of completion of the search | Examiner |
|---|---|---|
| The Hague | 19 June 2024 | Tortelli, Michele |

EPO FORM 1503 03.82 (P04C01)

## ANNEX TO THE EUROPEAN SEARCH REPORT
## ON EUROPEAN PATENT APPLICATION NO.

EP 24 30 5257

19-06-2024

| Patent document cited in search report | | Publication date | Patent family member(s) | | Publication date |
|---|---|---|---|---|---|
| US 2023284077 | A1 | 07-09-2023 | CN | 115769626 A | 07-03-2023 |
| | | | EP | 4179713 A1 | 17-05-2023 |
| | | | US | 2023284077 A1 | 07-09-2023 |
| | | | WO | 2022008086 A1 | 13-01-2022 |
| EP 4187960 | A1 | 31-05-2023 | CN | 114071499 A | 18-02-2022 |
| | | | EP | 4187960 A1 | 31-05-2023 |
| | | | US | 2023189309 A1 | 15-06-2023 |
| | | | WO | 2022028087 A1 | 10-02-2022 |
| WO 2021067130 | A1 | 08-04-2021 | NONE | | |
| EP 4068706 | A1 | 05-10-2022 | CN | 117063453 A | 14-11-2023 |
| | | | EP | 4068706 A1 | 05-10-2022 |
| | | | JP | 2024501088 A | 10-01-2024 |
| | | | KR | 20230152082 A | 02-11-2023 |
| | | | WO | 2022208975 A1 | 06-10-2022 |

EPO FORM P0459

For more details about this annex : see Official Journal of the European Patent Office, No. 12/82